**Europäisches Patentamt**

**European Patent Office**

**Office européen des brevets**

(19)

(11) Veröffentlichungsnummer: **0 093 233**
**B1**

(12) # EUROPÄISCHE PATENTSCHRIFT

(45) Veröffentlichungstag der Patentschrift:
**14.05.86**

(51) Int. Cl.⁴: **B 60 R 22/34**

(21) Anmeldenummer: **83101434.5**

(22) Anmeldetag: **15.02.83**

(54) **Aufwickelvorrichtung für Sicherheitsgurte.**

(30) Priorität: **29.04.82 DE 3215929**

(43) Veröffentlichungstag der Anmeldung:
**09.11.83 Patentblatt 83/45**

(45) Bekanntmachung des Hinweises auf die Patenterteilung:
**14.05.86 Patentblatt 86/20**

(84) Benannte Vertragsstaaten:
**FR GB IT SE**

(56) Entgegenhaltungen:
**DE - A - 2 460 119**
**FR - A - 2 269 651**
**FR - A - 2 303 570**

(73) Patentinhaber: **Bayern-Chemie Gesellschaft für flugchemische Antriebe mit beschränkter Haftung, D-8261 Aschau a. Inn (DE)**

(72) Erfinder: **Nilsson, Karl-Erik, Johann-Sebastian-Bach-Strasse 56, D-8012 Ottobrunn (DE)**

(74) Vertreter: **Frick, Gerhard, Harthausener Strasse 18 Ortsteil Neukeferloh, D-8011 Grasbrunn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Aufwickelvorrichtung für Sicherheitsgurte in Fahrzeugen mit einem Gurtaufrollautomaten und einem Rückstrammer nach dem Oberbegriff des Anspruches 1.

Rückstrammer dienen dazu, eine Gurtlose beim Fahrzeugaufprall durch Zurückziehen des Gurtes zu beseitigen, damit der freie Vorfallweg bis zum Wirksamwerden des Gurtes möglichst gering ist. Für eine ordnungsgemässe Gurtstrammung ist dabei ein Gurtrückzug von etwa 20 cm erforderlich. Dies entspricht einer Drehung der Gurtbandspule des Gurtaufrollautomaten von etwa 550°.

Eine Aufwickelvorrichtung nach dem Oberbegriff des Anspruches 1 ist bereits bekannt (DE-A-2 510 514). Dabei sind zwei Drehflügel an der Drehkolbenwelle des Rotationskolbenmotors axial nebeneinander angeordnet, wobei dem ersten Drehflügel an der Drehkolbenwelle unter Bildung einer ersten Expansionskammer ein gehäusefester Flügel zugeordnet ist, während dem zweiten Drehflügel an der Drehkolbenwelle in einer zweiten Expansionskammer ein Drehflügel zugeordnet ist, der an einem drehbaren Mantel und einem gurtbandspulenseitigen Ring befestigt ist. Zur Kupplung des gurtbandspulenseitigen Rings mit der Gurtbandspule ist eine Vielzahl umfangsmässiger Bohrungen in der dem Rotationskolbenmotor zugewandten Seitenscheibe der Gurtbandspule vorgesehen, in die ein durch die Treibgase des Treibsatzes beaufschlagbarer Bolzen einschiebbar ist, der an den gurtbandspulenseitigen Ring, mit dem der eine Drehflügel der zweiten Expansionskammer fest verbunden ist, angeordnet ist. Das Klinkenzahnrad zur fahrzeugsensitiven Blockierung des Gurtaufrollautomaten wird durch die dem Rotationskolbenmotor zugewandte Scheibe der Gurtbandspule gebildet. Die Sensorraste für das Kinkenzahnrad wird durch eine kleine Klinke gebildet, die eine grössere Klinke anhebt, um sie in Eingriff mit dem Klinkenzahnrad zu bringen. Die in die beiden Expansionskammern eindringenden Gase bewirken eine Verdrehung des Flügels der Drehkolbenwelle, der mit dem gehäusefesten Flügel zusammenwirkt, ferner eine Verdrehung des zweiten Drehflügels der Drehkolbenwelle, der mit dem am gurtbandseitigen Ring befestigten Drehflügel zusammenwirkt. Gleichzeitig erweitert sich der Expansionsraum zwischen dem zweiten Drehflügel der Drehkolbenwelle und dem am gurtbandseitigen Ring befestigten Drehflügel, so dass durch letzteren der Gurtbandspule fast zwei Umdrehungen erteilt werden.

Nachteilig bei der bekannten Aufwickelvorrichtung ist jedoch der relativ komplizierte Aufbau des zwei nebeneinander angeordnete Expansionsräume aufweisenden Rotationskolbenmotors, das Fehlen einer gurtbandsensitiven Blockierung sowie der Umstand, dass die Verriegelungsglieder, um hinreichend robust zu sein, als massive Gussteile ausgebildet werden müssen.

Die Erfindung, wie sie in dem Anspruch 1 gekennzeichnet ist, löst die Aufgabe, eine Aufwickelvorrichtung nach dem Oberbegriff des Anspruchs 1 zu schaffen, die auch die Verwendung eines einfach aufgebauten Rotationskolbenmotors zulässt, mit relativ wenigen Bauteilen auskommt und daher leicht zu montieren ist, in die eine gurtbandsensitive Blockierung leicht integriert werden kann und bei der die Verriegelungsglieder als Stanzteile ausgebildet werden können.

Nachstehend ist ein Ausführungsbeispiel der erfindungsgemässen Aufwickelvorrichtung anhand der Zeichnung näher erläutert. Darin zeigen:

Figur 1 einen Längsschnitt durch eine Gurtaufwickelvorrichtung, wobei die Gurtaufrollerwelle jedoch nur teilweise geschnitten dargestellt ist;

Figur 2 einen Schnitt durch die Gurtaufwickelvorrichtung nach Figur 1, und zwar in Blickrichtung II-II;

Fig. 3 einen Schnitt entsprechend Figur 2, jedoch in Blickrichtung III-III und auf die in der Gurtaufrollerwelle untergebrachten Teile beschränkt;

Figuren 4 bis 6 den Montageablauf der Teile des Rückstrammergehäuses in perspektivischer Darstellung;

Figur 7 die vormontierte Gurtaufrollerwellenbaugruppe in auseinandergezogener, perspektivischer Darstellung;

Figur 8 den Gesamtaufbau der Gurtaufwickelvorrichtung in auseinandergezogener, perspektivischer Darstellung;

Fig. 9 den Schnitt entlang der Linie IX-IX in Figur 1.

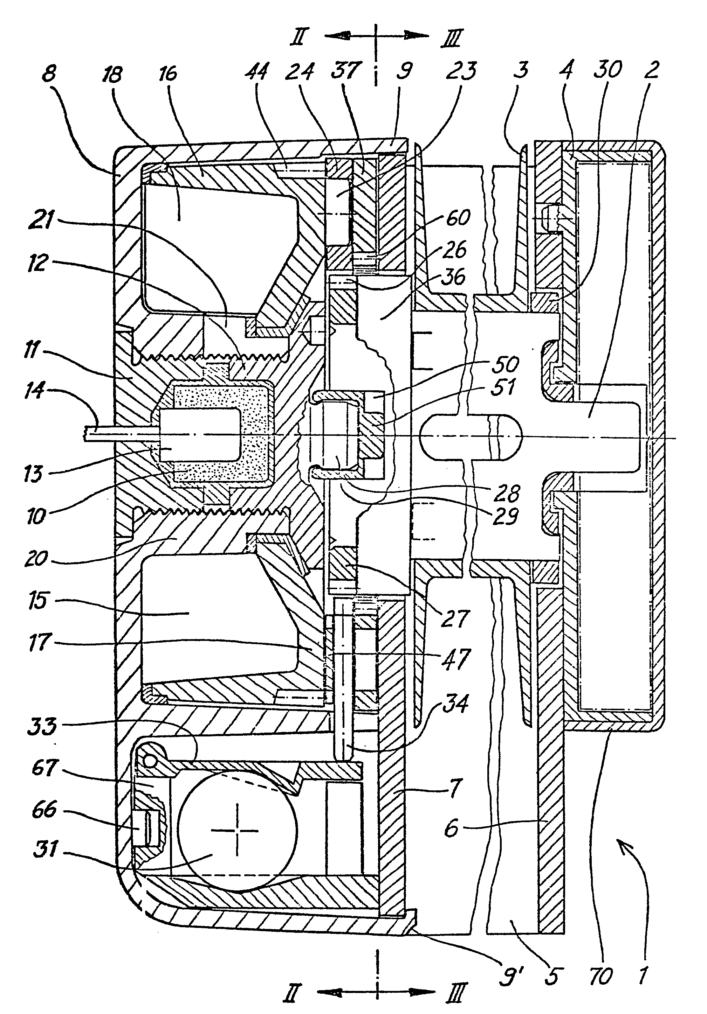

Gemäss Figur 1 besteht die Gurtaufwickelvorrichtung im wesentlichen aus einem Gurtaufrollautomaten 1 mit einer drehfest auf einer Gurtaufrollerwelle 2 angeordneten Gurtbandspule 3, einer (nicht dargestellten) Gurtbandaufwickelfeder in einem Gehäuse 4 sowie einem Gehäuse aus einer rückseitigen Platte 5 und zwei von derselben nach vorne ragenden plattenförmigen Schenkeln 6 und 7, wobei an dem einen Schenkel 6 das Aufwickelfedergehäuse 4 und an dem anderen Schenkel 7 das den Rückstrammer aufnehmende Gehäuse 8 befestigt ist.

Das Rückstrammergehäuse 8 ist formschlüssig und drehfest über Verbindungskrallen 9 mit dem plattenförmigen Schenkel 7 des Gehäuses des Gurtaufrollautomaten 1 verbunden. Im unteren Bereich der Figur 1 ist eine angeprägte Verbindungskralle 9' zu sehen, durch die das Rückstrammergehäuse 8 und der Schenkel 7 des Gehäuses des Gurtaufrollautomaten 1 auch axial formschlüssig miteinander verbunden sind.

In dem Zentrum des Rückstrammergehäuses 8 ist ein pyrotechnischer Treibsatz 10 zwischen einem Schraubverschluss 11 und einem Schraubverschluss 12 angeordnet. Der Treibsatz 10 wird durch einen Zünder 13 gezündet. Ein Zündkabel 14 führt durch den Verschluss 11 vom Zünder 13 nach aussen.

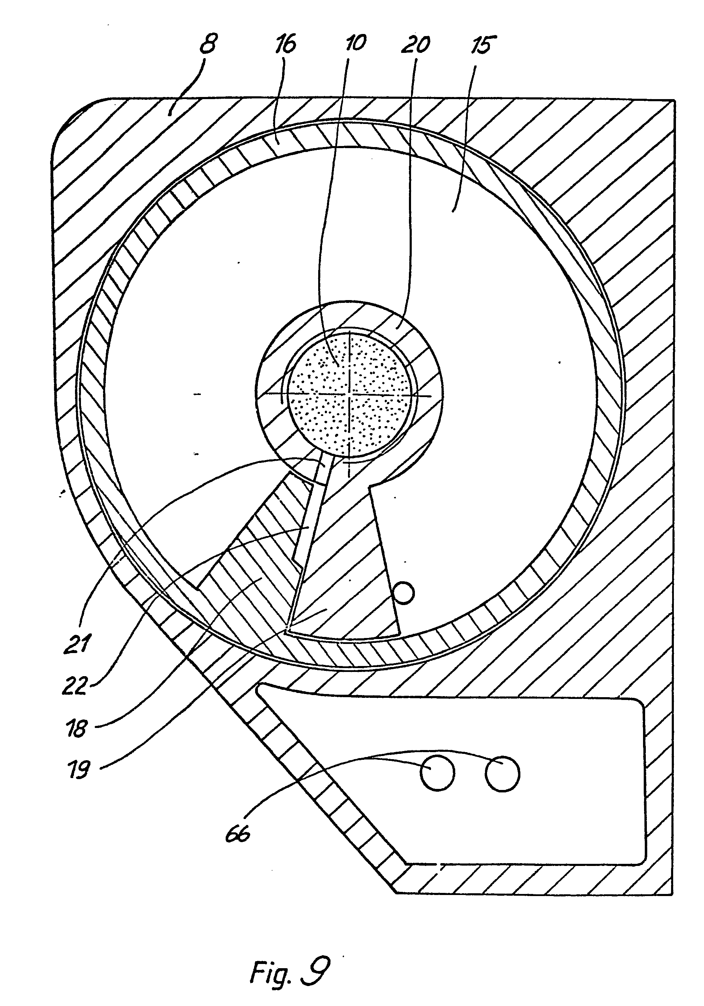

In einer Ringkammer 15 ist an einem drehbaren Gehäuse aus einem Mantel 16 und einem Ring 17 ein Drehflügel 18 befestigt. Der Drehflügel 18 liegt an einem Anschlagnocken 9 an, der an einem gehäusefesten Hohlzapfen 20 befestigt ist (Figur 9), der den Treibsatz 10, den Zünder 13 sowie die beiden Schraubverschlüsse 11 und 12 aufnimmt. Eine Bohrung 21 führt durch den Hohlzapfen 20 von dem Treibsatz 10 in die Expansionskammer 22 zwischen dem Drehflügel 18 und dem Anschlagsnocken 19 (Figur 9). Beim Zünden des Treibsatzes 10 gelangen die Treibgase durch die Bohrung 21 in die Expansionskammer 22 und beaufschlagen den Drehflügel 18, wodurch das Gehäuse aus dem Mantel 16 und dem Ring 17 in Drehung versetzt wird.

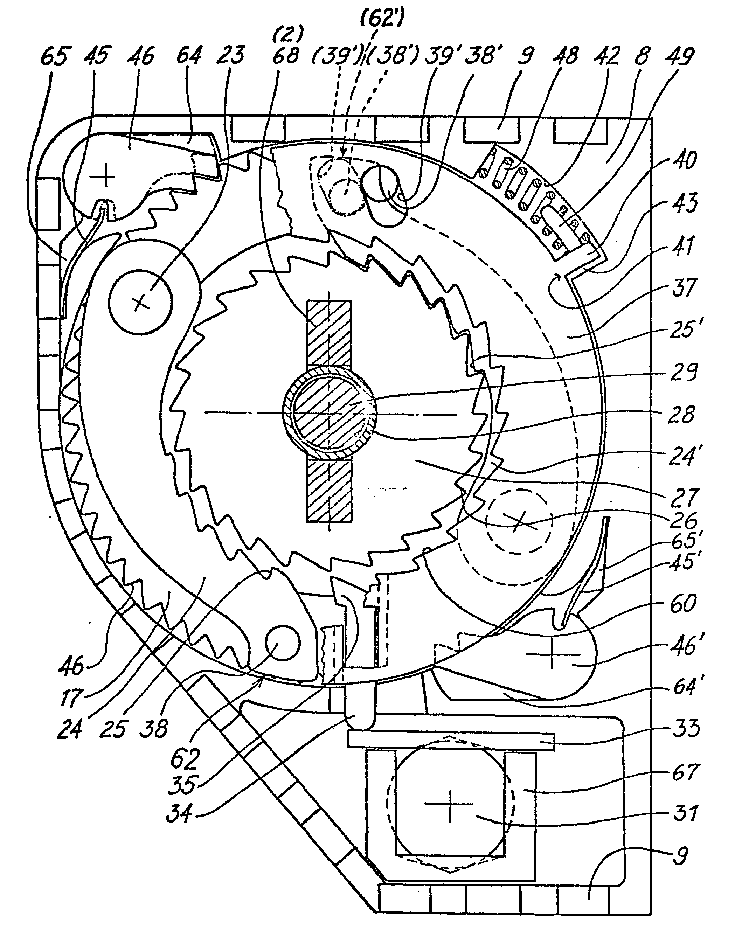

An dem mit dem Drehflügel 18 drehfest verbundenen Ring 17 sind zwei um Zapfen 23, 23' verschwenkbar gelagerte Riegel 24, 24' mit einer sägezahnförmigen Verzahnung 25, 25' vorgesehen (Figur 2), die beim Zünden des Treibsatzes 10, also beim Drehen des Rings 17 in Gurteinzugsrichtung in Eingriff mit einer komplementären sägezahnförmigen Verzahnung 26 eines Klinkenzahnrades 27 gelangen, das formschlüssig mit der Aufrollerwelle 2 verbunden ist.

Die Aufrollerwelle 2 ist auf einer Lagerbuchse 28 auf einem Lagerzapfen 29 sowie in einem Lager 30 im Gehäuseschenkel 6 gelagert. Der Lagerzapfen 29 ist an dem Schraubverschluss 12 für den Treibsatz 10 vorgesehen.

Die fahrzeugsensitive Blockierung, also die normale Blockierung bei starken Bremsvorgängen oder Kurvenfahrten (Verzögerung nur 0,4 g), wird von einer Sensorkugel 31 eingeleitet, die dann aus ihrer Ruhelage bewegt wird, die schiefe Ebene 32 hinaufrollt und den Sensorhebel 33 anhebt.

Die gurtbandsensitive Blockierung, die bei starkem Ruck am Gurtband eingeleitet wird, befindet sich in einer Kapsel 36.

Gemäss Figur 2 sind sind beiden Riegel 24, 24' diametral gegenüberliegend an dem Ring 17 befestigt.

Die Riegel 24, 24' stehen mit einer Steuerscheibe 37 in Verbindung und zwar über je einen Führungszapfen 38, 38' an jedem Riegel 24, 24', die in entsprechende Führungsschlitze 39, 39' in der Steuerscheibe 37 ragen. In Gurtbandauszugsrichtung liegt das voreilende Ende der Führungsschlitze 39, 39' gegenüber dem nacheilenden Ende radial weiter aussen.

Die Steuerscheibe 37 ist in Figur 2 rechts in Ruhelage nur zur Hälfte dargestellt, um den linken Riegel 24 (ebenfalls in Ruhestellung) deutlicher zu zeigen. Der rechte Riegel 24' ist in eingerasteter Blockierstellung gezeichnet. Die dafür zugehörige Stellung des Führungszapfens 38' in der Führung 39' ist strichpunktiert dargestellt.

Die Steuerscheibe 37 weist einem Nocken 40 mit einer Sollbruchstelle 41 auf. Durch eine Nut 42 im Rückstrammergehäuse 8 wird eine Anschlagsfläche 43 für den Nocken 40 gebildet.

Eine Sperreinrichtung, die eine Drehung des Ringes 15 in Gurtbandauszugsrichtung verhindert, wird durch eine Aussenverzahnung 44 sowie zwei jeweils um eine gehäusefeste Achse verschwenkbare, durch Federn 45, 45' auf die Aussenverzahnung 44 zu belastete Sperrklinken 46, 46' gebildet.

Der Stift zur fahrzeugsensitiven Blockierung ist in einer Führung 47 in der Steuerscheibe 37 verschieblich geführt. Durch eine Feder 48, die sich in der Nut 42 im Rückstrammergehäuse 8 an den Nocken 40 an der Steuerscheibe 37 abstützt, wird die Steuerscheibe 37 in Gurtbandeinzugsrichtung belastet. Am Nocken 40 ist eine Führung 49 für die Feder 48 vorgesehen.

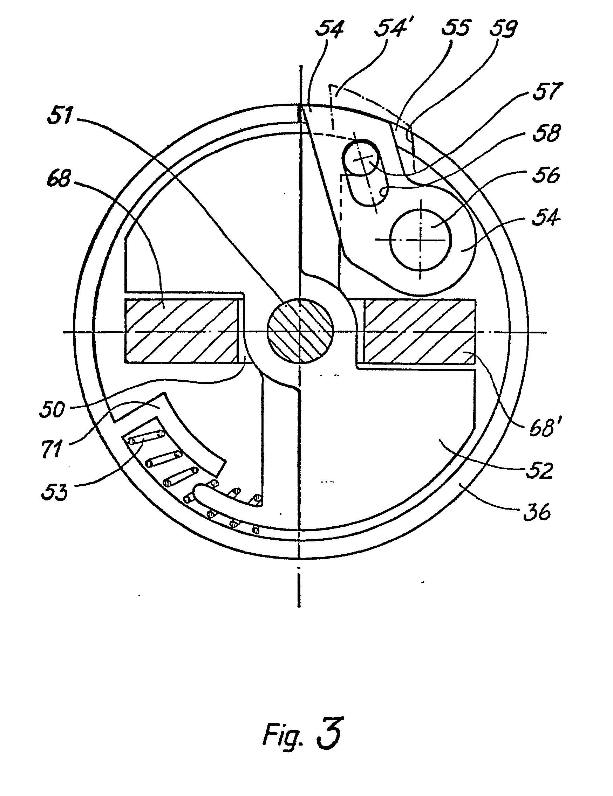

Gemäss Figur 1 und 3 ist in einer Ausnehmung 50 der Aufrollerwelle 2 auf einem Zapfen 51 an der Lagerbuchse 28 eine scheibenförmige Trägheitsmasse 52 schwenkbar gelagert. Über eine Feder 53 wird die Trägheitsmasse 40 in Ruhestellung gehalten. Die Trägheitsmasse 52 ist eingeschlossen zwischen dem Klinkenzahnrad 27 und der Kapsel 36, die im Bereich eines Rasthebels 54 eine Aussparung 55 aufweist. Der Rasthebel 54 ist schwenkbar auf dem einstückig mit der Kapsel 36 verbundenen Schwenkzapfen 56 gelagert. Die Position des Rasthebels 54 wird durch einen Führungszapfen 57 an der Trägheitsmasse 52 sowie durch einen im Rasthebel 54 vorgesehenen Führungsschlitz 58, in den der Führungszapfen 57 hineinragt, bestimmt. Eine Abstützung 71 stützt die Feder 53 ab.

Bei einem ruckartigen Gurtbandauszug wird die Aufrollerwelle 2 und somit die mit ihr drehfest verbundene Kapsel 36 mit dem Schwenkzapfen 56 in Drehung versetzt. Die Trägheitsmasse 52 verharrt zunächst entgegen der Kraft der Feder 53 in ihrer momentanen Lage. Dadurch findet eine Relativbewegung zwischen dem Schwenkzapfen 56 und dem Führungszapfen 57 statt, die den gegen die Anschlagsfläche 59 stossenden Rasthebel 54 zum Auslenken in die in Figur 3 mit 54' bezeichnete Stellung bringt.

Die aus der Aussparung 55 der Kapsel 31 ragende Spitze des Rasthebels 54 gelangt damit in Eingriff mit einer Innenverzahnung 60 der Steuerscheibe 37. Bemerkt sei, dass die Stärke der Feder 53 ein Mass für die gurtbandsensitive Blockierschwelle darstellt. Je stärker die Feder 53 ist, desto stärker muss der Ruck am Gurtband sein, um eine Blockierung einleiten zu können.

Die erfindungsgemässe Gurtbandaufwickelvorrichtung funktioniert folgendermassen:

Bei Überschreiten einer bestimmten Beschleunigungsschwelle bei einem Unfall (etwa 5 g), leitet ein Crash-Sensor Strom in das Zündkabel 14. Der Zünder 13 zündet die Treibladung 10. Der sich aufbauende Druck der Treibgase durchstösst die Wandung der Kartusche 61, in der sich der Treibsatz 10 befindet, so dass die Treibgase über die Bohrung 21 in die Hohlzapfen 20 in die Expansionskammer 22 zwischen Drehflügel 18 und Anschlagnocken 19 gelangen. Das unter hohem Druck nachströmende Treibgas treibt den Drehflügel 18 vorwärts und versetzt den Ring 17 in Drehung.

Die beiden über die Zapfen 23, 23' mit dem Ring 17 verbundenen Riegel 24, 24' drehen mit. Ebenso die vorgelagerte Steuerscheibe 37, die über die Führungsschlitze 39, 39' und die Führungszapfen 38, 38' mit den Riegeln 24, 24' in Verbindung steht. Die Steuerscheibe 37 wird jedoch sofort abgebremst, da der Nocken 40 gegen die Anschlagsfläche 43 der Nut 42 im Rückstrammergehäuse 8 schlägt. Mittels der Sollbruchstelle 41 wird dadurch der Nocken 40 von der Steuerscheibe 37 abgebrochen.

Aufgrund des weiterdrehenden Rings 17 werden die Riegel 24, 24' über ihre Führungszapfen 38, 38' in den Führungsschlitzen 57, 57' der Steuerscheibe 37 noch vor dem Sollbruch nach innen ausgelenkt. Dadurch gerät die Verzahnung 25, 25' der Riegel 24, 24' in Eingriff mit der Verzahnung 26 des Klinkenzahnrades 27, das fest mit der Aufrollerwelle 2 verbunden ist. Dieser Einrastvorgang im Sinne einer Mitnehmerkupplung ist etwa 10° nach Rotationsbeginn abgeschlossen. Während der Drehung des Drehflügels 18 ratschen die beiden Sperrklinken 46, 46', die von den Federn 45, 45' beaufschlagt werden, über die Sperrverzahnung 44 an dem einstückig mit dem Ring 15 ausgebildeten Mantel 16.

Der weitere Ablauf hängt von der Gegenkraft ab, die am Gurtband angreift, also davon, ob der Insasse stramm angegurtet war oder eine sehr grosse Gurtlose vorherrschte.

Im ersteren Fall ergibt sich ein grosser bzw. schneller Kraftanstieg. Zum Beispiel könnte die Kraft der Treibgase des Treibsatzes 10 schon nach ca. 180° Drehwinkel im Gleichgewicht stehen mit der Gegenkraft aus dem Gurtband. Der Drehflügel 18 und damit der Ring 17 wird dann zum Stillstand kommen, ohne die maximal mögliche Drehung vollendet zu haben.

In dieser Stellung rasten die Sperrklinken 46, 46' in die Rücklaufsperrverzahnung 44 an dem mit dem Ring 17 einstückig ausgebildeten Mantel 16 ein. Die Riegel 24, 24' bleiben im Eingriff mit dem Klinkenzahnrad 27, da sie so ausgelegt sind, dass sie ein einlenkendes Moment entwickeln.

Der Kraft aus der Unfallbelastung verläuft über folgende Teile: Gurtband, Aufrollerwelle 2, Klinkenzahnrad 27, Riegel 24, 24', Ring 17, Mantel 16, Sperrklinken 46, 46', Rückstrammergehäuse 8, Gehäuse des Gurtaufrollautomaten 1, Fahrzeugkarosserie.

Im anderen Fall mit grosser Gurtlose ergibt sich ein langsamer Kraftanstieg im Gurtband. Der Ring 17 wird den maximalen Drehwinkel zurücklegen, bis der Drehflügel 18 an dem Anschlagsnocken 19 anschlägt. Bei entsprechender Gegenkraft des Gurtbandes ergibt sich die gleiche Situation, wie vorstehend geschildert. Ist die Gegenkraft des Gurtbandes beim Anschlagen des Drehflügels 18 gegen den Anschlagsnocken 19 und somit beim Stillstand der Drehbewegung des Rings 17 noch nicht nennenswert angestiegen, so kommen die Verzahnung 25, 25' der stillstehenden Riegel 24, 24' und die Verzahnung 26 des Klinkenzahnrades 27 ausser Eingriff, d.h. es tritt ein Freilauf der Aufrollerwelle 2 auf, der es ermöglicht, noch mehr Gurtband aufzuwickeln.

Während der Beschleunigungsphase durch die Treibgase des Treibsatzes 10 nehmen die rotierenden Teile (Aufrollerwelle 2 mit Klinkenzahnrad 27, Gurtbandspule 3 sowie der Gurtwickel) kinetische Energie auf. Aufgrund der Sägezahnform der Verzahnung 25, 25' der Riegel 24, 24' und der Verzahnung 26 des Klinkenzahnrades 27 kann sich die Aufrollerwelle 2 durch die aufgenommene kinetische Energie weiterdrehen, und zwar so lange, bis die Kraft aus der Massenträgheit der sich aufbauenden Gegenkraft des Gurtbandes die Waage hält. In dem Moment, in dem der Gurtbandeinzug in einen Gurtbandauszug wechselt, rasten die beiden Sperrklinken 46, 46' in die Rücklaufsperrverzahnung 44 an den mit dem Ring 17 einstückig ausgebildeten Mantel 16 ein.

Durch die volle Drehung des Drehflügels befinden sich die Kopfzonen 62, 62' der Riegel 24, 24' über den Zähnen der Sperrklinken 46, 46', die die Riegel 24, 24' ebenfalls in Zahneingriff mit der Verzahnung 26 des Klinkenzahnrads 27 drücken. Im Sinne einer doppelten Sicherheit würde auch die gurtbandsensitive Blockierung (52, 54, 60) für eine Einrastung der Riegel 24, 24' in die Verzahnung 26 des Klinkenzahnrads 27 sorgen.

Die normale Blockierung des Gurtaufrollautomaten bei Überschreiten einer vorbestimmten Beschleunigungsschwelle wird fahrzeugsensitiv (bis 0,4 g) über die Sensorkugel 31 eingeleitet oder gurtbandsensitiv über die Trägheitsmasse 52 bei 1,0 bis 1,5 g. Bei fahrzeugsensitiver Blockierung wird beim Auslenken der Kugel 31 über den Hebel 33 der Stift 34 mit seinem Zahn 35 in Eingriff mit der Verzahnung 26 des Klinkenzahnrades 27 gebracht. Bewegt sich nun der Fahrzeuginsasse bei einer Fahrzeugverzögerung nach vorne wird über das herausziehende Gurtband die Aufrollerwelle 2 in Drehung versetzt. Der sich in Eingriff mit der Verzahnung 26 des Klinkenzahnrads 27 befindliche Stift 34 wird mitgenommen und nimmt über die Führung 47 in der Steuerscheibe 37 die Steuerscheibe 37 mit. Durch die Drehung der Steuerscheibe 37 werden die Riegel 24, 24' über die Führungsschlitze 39, 39' an der Steuerscheibe 3 und die in sie hineinragenden Führungszapfen 38, 38' an den Riegeln 24, 24' einwärts bewegt. Dadurch gelangen die Verzahnungen 25, 25' der Riegel 24, 24' in Eingriff mit der Verzahnung 26 des Klinkenzahnrads 27. Die formschlüssige Blockierung zur Aufnahme der Belastung ist hergestellt.

Die gurtbandsensitive Blockierung wird eingeleitet, wenn mit einem Ruck (grösser 1,0 g) an dem Gurtband gezogen wird.

Aufgrund ihrer Massenträgheit verharrt die Trägheitsmasse 52 entgegen der Kraft der Feder 53 dabei in ihrer Lage. Da die Aufrollerwelle 2 weiterdreht und somit auch der einstückig mit der Kapsel 36 verbundene Schwenkzapfen 56, wird der Hebel 54 durch den Schlitz 58 und den in ihn hineinragenden Führungszapfen 57 an der Trägheitsmasse 52 durch Anlage an der Anschlagsfläche 59 nach aussen in die Innenverzahnung 60 der Steuerscheibe 37 geschoben. Die Steuerscheibe 37 dreht dadurch mit, wodurch, wie vorstehend beschrieben, die Verzahnung 25, 25' der Riegel 24, 24' in Eingriff mit der Verzahnung 26 des Klinkenrades 27 gebracht wird.

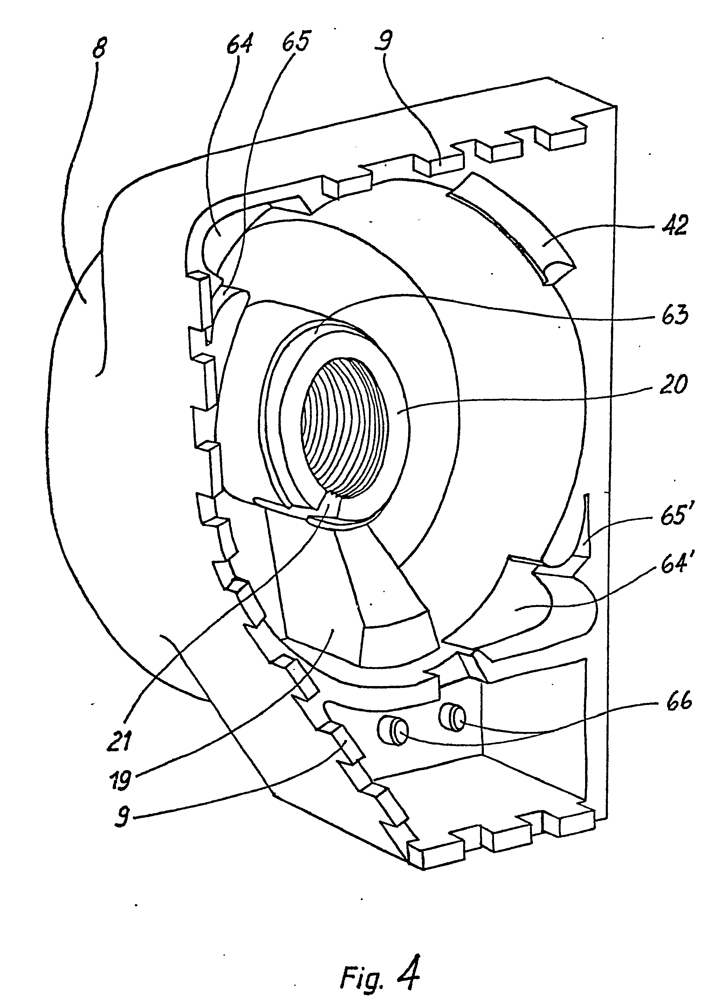

Die Figuren 4 bis 6 verdeutlichen den Montageaufbau der Teile des Rückstrammergehäuses 8.

Das Rückstrammergehäuse 8 ist in Figur 4 dargestellt. Es weist den Hohlzapfen 20 auf, in dem innen die Treibladung 10 angeordnet wird und um den sich die Ringkammer 15 für den Drehflügel 18 erstreckt.

Ein Bund 63 am Zapfen 20 dient zur Aufnahme des Lagers für den Ring 17. Weiterhin sind im Rückstrammergehäuse 8 Stützlager 64, 64' für die Sperrklinken 46, 46' vorgesehen, ferner Federschlitze 65, 65' für die Federn 45, 45' sowie die Nut 42 für den Nocken 40 und die Feder 48. Im unteren Bereich des Rückstrammergehäuses 8 sind Fixierzapfen 66 zur genauen Positionierung des Gehäuses 67 des Sensors für die fahrzeugsensitive Blockierung vorgesehen. Die Verbindungskrallen 9 dienen zur formschlüssigen Verbindung des Rückstrammergehäuses 8 mit dem Schenkel 7 des Gurtaufrollautomatengehäuses, um Kräfte und Momente zu übertragen. Die Sicherung des Rückstrammergehäuses 8 gegen Herabfallen erfolgt durch Verprägen einiger etwas länger ausgebildeter Verbindungskrallen 9' mit dem Schenkel 7 des Gurtaufrollautomatengehäuses. In die Ringkammer 15 wird das drehbare Gehäuse aus dem Mantel 16 und dem Ring 17 eingeleitet. Dabei kommt der Drehflügel 18 im Bereich der Bohrung 21 gegen den Anschlagsnocken 19 zur Anlage.

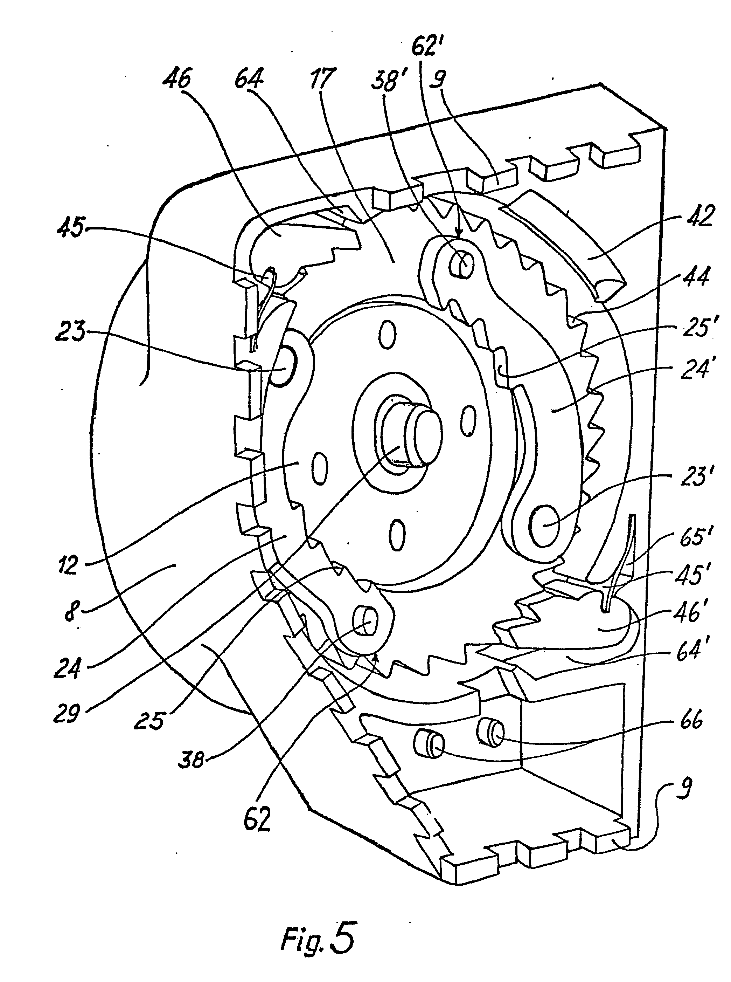

In Fig. 5 ist das bewegliche Gehäuse aus dem Mantel 16 und dem Ring 17 in die Ringkammer 15 eingesetzt und durch den Schraubverschluss 12 positioniert. Weiterhin sind die Riegel 24, 24' auf die Zapfen 23, 23' aufgesetzt sowie die Sperrklinken 46, 46' mit ihren Federn 45, 45' in die Stützlager 64, 64' und die Federschlitze 65, 65' eingelegt.

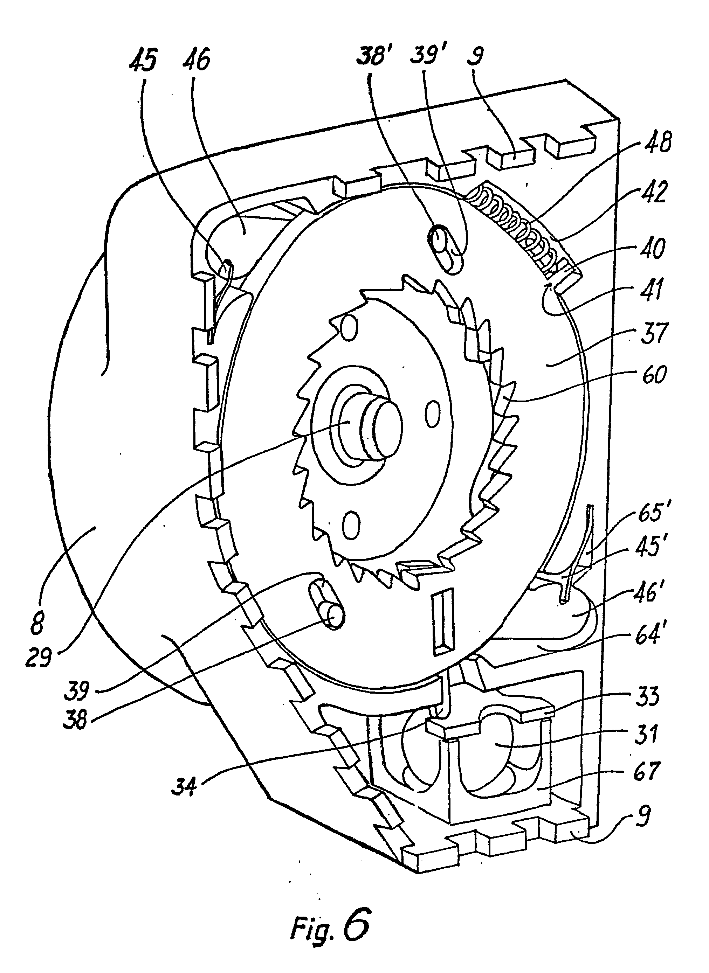

In Figur 6 ist eine weitere Komplettierung mit der Steuerscheibe 37 mit dem Stift 34, der Feder 48 sowie dem Verzögerungssensor bestehend aus der Sensorkugel 31, dem Sensorgehäuse 67 und dem Sensorhebel 33 dargestellt. In diesem Zustand ist in dem Rückstrammergehäuse 8 eine vormontierte Baueinheit vorhanden, die für sich, unabhängig vom Gurtaufrollautomaten, gefertigt und auf Lager gelegt werden kann.

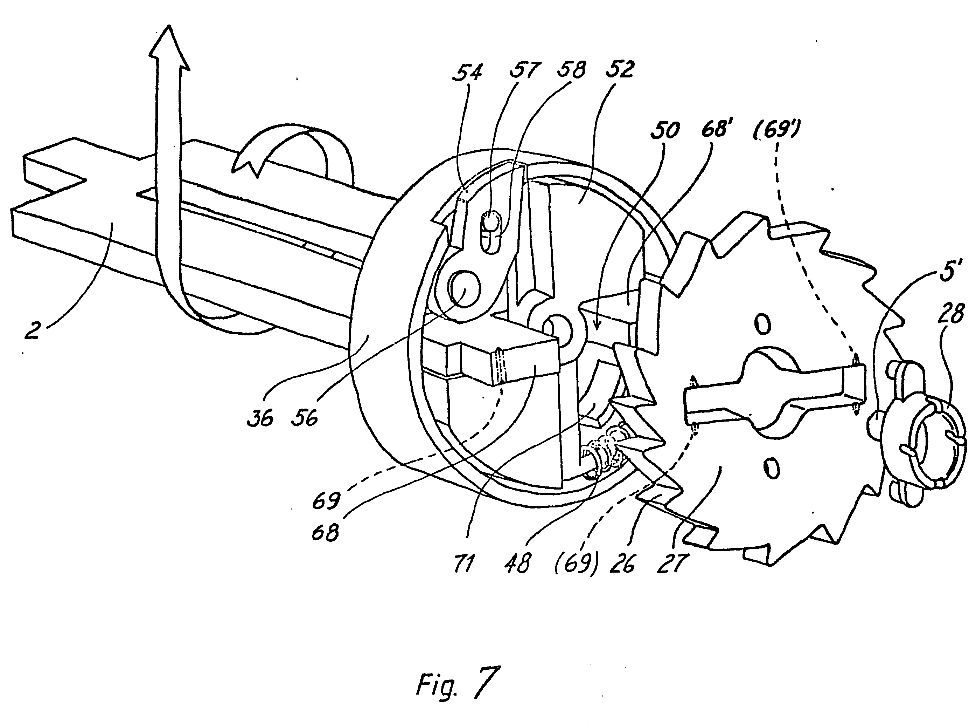

In Figur 7 ist die ebenfalls vormontierte Aufrollerwellenbaugruppe dargestellt, die aus der Aufrollerwelle 2 und der vorstehend geschilderten gurtbandsensitiven Blockiereinrichtung in der Kapsel 36 besteht. Die auseinandergezogene Darstellung der Figur 7 verdeutlicht die relativ einfache Einlegearbeit bei der Montage.

Nach dem Aufsetzen des Klinkenzahnrades 27 auf die Vorsprünge 68, 68' der Aufrollerwelle 2 werden das Klinkenzahnrad 27 und die Vorsprünge 68' 68' durch zwei Prägungen 69, 69' gesichert.

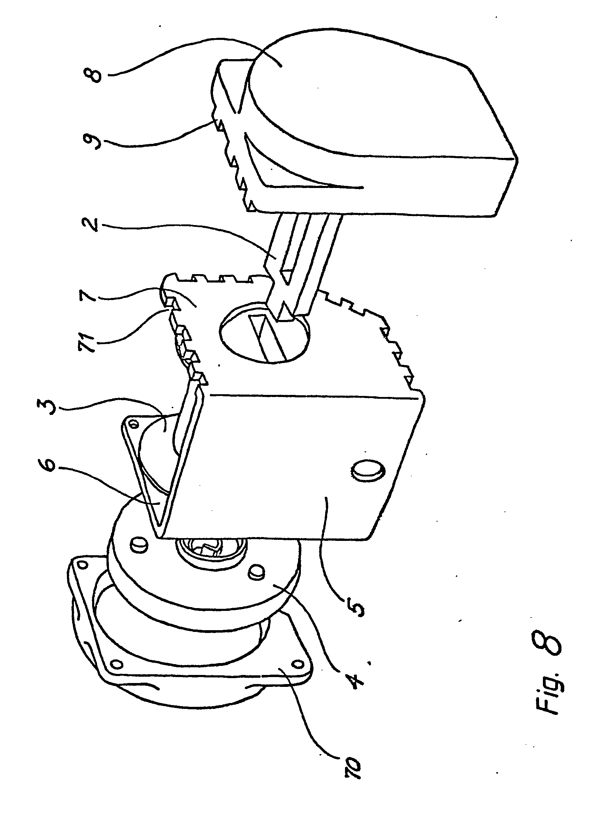

Aus Figur 8 geht hervor, dass die Endmontage der Aufwickelvorrichtung im wesentlichen aus drei vormontierten Baueinheiten erfolgt, nämlich der in dem Rückstrammergehäuse 8 vormontierten Baueinheit, der Aufrollerwellenbaugruppe, von der die Aufrollerwelle 2 sichtbar ist, und dem Gurtaufrollautomatengehäuse, das bereits mit dem Federgehäuse 70 und der Aufwickelfederkassette 4 komplettiert ist. Deutlich sichtbar sind die Verbindungskrallen 9 am Rückstrammergehäuse 8, die in Nuten 71 des Schenkels 7 des Gurtaufrollautomatengehäuses eingreifen.

**Patentansprüche**

1. Aufwickelvorrichtung für Sicherheitsgurte in Fahrzeugen, mit einem Gurtaufrollautomaten und einem Rückstrammer, der einen durch einen pyrotechnischen Treibsatz antreibbaren Rotationskolbenmotor mit einem Drehflügel (18) des Rotationskolbenmotors drehfest verbundenen, mit der Aufrollerwelle (3) des Gurtaufrollautomaten kuppelbaren und zur Drehachse des Drehflügels (18) der Aufrollerwelle (3) koaxialen Ring (17) aufweist, wobei die Aufrollerwelle (3) drehfest mit einem Klinkenzahnrad (27) verbunden ist, in das eine Sensorraste (34) zur fahrzeugsensitiven Blockierung des Gurtaufrollautomaten einrastet, gekennzeichnet durch wenigstens ein an dem mit Drehflügel (18) drehfest verbundenen Ring (17) angeordnetes Blockierelement (24, 24'), das mit einer Steuerscheibe (37) über eine Führung (38, 38', 39, 39') in Verbindung steht und das mit dem drehfest mit der Aufrollerwelle (3) verbundenen Klinkenzahnrad (27) über die Steuerscheibe (37) ein- und ausrastbar ist, sowie eine Sperreinrichtung (44, 46, 46'), die eine Drehung des Rings (17) in Gurtbandauszugsdrehrichtung verhindert.

2. Aufwickelvorrichtung nach Anspruch 1, dadurch gekennzeichnet, dass an dem Ring (17) zwei diametral gegenüberliegende Blockierelemente (24, 24') vorgesehen sind.

3. Aufwickelvorrichtung nach Anspruch 1 oder 2, dadurch gekennzeichnet, dass das Blockierelement bzw. die Blockierelemente als verzahnter, auf Zug beanspruchbarer Riegel (24, 24') ausgebildet ist bzw. sind.

4. Aufwickelvorrichtung nach Anspruch 3, dadurch gekennzeichnet, dass die Führung, über die der bzw. die Riegel (24, 24') mit der Steuerscheibe (37) in Verbindung steht bzw. stehen, durch einen Führungszapfen (38, 38') an dem von einer Riegelschwenkachse (23, 23') abgewandten Ende des bzw. der Riegel (24, 24') gebildet wird, der in einem Führungsschlitz (39, 39) in der Steuerscheibe (37) ragt, der sich von seinem in Gurtbandeinzugsdrehrichtung voreilenden zu seinem nacheilenden Ende schräg radial von innen nach aussen erstreckt.

5. Aufwickelvorrichtung nach einem der vorstehenden Ansprüche, dadurch gekennzeichnet, dass die Steuerscheibe (37) einen Nocken (40) mit einer Sollbruchstelle (41) aufweist und eine gehäusefeste Anschlagsfläche (43) für den Nocken (40) vorgesehen ist.

6. Aufwickelvorrichtung nach einem der vorstehenden Ansprüche, dadurch gekennzeichnet, dass die Sperreinrichtung, die eine Drehung des Rings (17) in Gurtbandauszugsrichtung verhindert, durch eine drehfest mit dem Ring (17) verbundene Verzahnung (44) und wenigstens eine gehäusefeste, auf den Ring (17) zu federbelastete Sperrklinke (46, 46') gebildet wird.

7. Aufwickelvorrichtung nach Anspruch 3 oder einem der vorstehenden Ansprüche sofern er auf Anspruch 3 rückbezogen ist, dadurch gekennzeichnet, dass die Verzahnung (25, 25') des Riegels bzw. der Riegel (24, 24') so ausgebildet ist, dass sie bei Stillstand des Rings (17) und umlaufender Aufrollerwelle (3) in Gurtbandeinzugsdrehrichtung ausser Eingriff mit der Verzahnung (26) des Klinkenzahnrads (27) kommt.

8. Aufwickelvorrichtung nach Anspruch 3 und Anspruch 6, dadurch gekennzeichnet, dass nach Abschluss der Gurtstrammung der bzw. die Riegel (24, 24') mit ihren ihrer Riegelschwenkachse (23, 23') abgewandten Kopfzonen (62, 62') über der bzw. den federbelasteten Sperrklinken (46, 46') zu liegen kommen und von dieser bzw. diesen in Eingriff mit der Verzahnung (56) des Klinkenzahnrades (27) gehalten werden.

9. Aufwickelvorrichtung nach einem der vorstehenden Ansprüche, dadurch gekennzeichnet, dass die Sensorraste die zur fahrzeugsensitiven Blockierung in das Klinkenzahnrad (27) einrastet, als Stift (34) ausgebildet ist, der in einer Führung (47) in der Steuerscheibe (37) in Richtung auf das Klinkenzahnrad (27) verschieblich geführt ist, wobei die Steuerscheibe (37) in Gurtbandeinzugsrichtung federbelastet ist.

10. Aufwickelvorrichtung nach Anspruch 9, dadurch gekennzeichnet, dass die Verschiebung des Stifts (34) durch einen Hebel (33) erfolgt, der von einer eine schiefe Ebene (32) hinaufrollenden Kugel (31) angehoben wird.

11. Aufwickelvorrichtung nach einem der Ansprüche 5 sowie 8 oder 9, dadurch gekennzeichnet, dass die Feder (48) zur Federbelastung der Steuerscheibe (37) in Gurtbandeinzugsdrehrichtung sich zwischen dem Gehäuse (8) des Rückstrammers und dem Nocken (40) abstützt.

12. Aufwickelvorrichtung nach einem der vorstehenden Ansprüche, dadurch gekennzeichnet, dass zur gurtbandsensitiven Blockierung die Steuerscheibe (37) eine Innenverzahnung (60) aufweist und an einem zur Gurtaufrollerwelle (2) koaxialen, gehäusefesten Zapfen (51) eine verschwenkbare Trägheitsmasse (52) vorgesehen ist, die über eine Führung mit einem um eine mit der Aufrollerwelle (2) drehfeste Achse (56) verschwenkbaren Rasthebel (54) in Verbindung steht, der bei einer Drehung der Aufrollerwelle (27 in Gurtbandauszugsdrehrichtung von einer aufrollerwellenfesten Anschlagsfläche (59) radial nach aussen in Eingriff mit der Innenverzahnung (60) der Steuerscheibe (37) gelenkt wird.

13. Aufwickelvorrichtung nach Anspruch 12, dadurch gekennzeichnet, dass die Führung, mit der die Trägheitsmasse (52) mit dem Rasthebel (54) in Verbindung steht, durch einen Führungszapfen (57) an der Trägheitsmasse (52) und einen Führungsschlitz (58) in dem Rasthebel (54) gebildet ist, in den der Führungszapfen (57) ragt, wobei sich der Führungsschlitz (58) im wesentlichen von der Rasthebelachse (56) zur Anschlagsfläche (59) erstreckt.

14. Aufwickelvorrichtung nach Anspruch 12 oder 13, dadurch gekennzeichnet, dass die Trägheitsmasse (52) in Gurtauszugsdrehrichtung federbelastet ist.

15. Aufwickelvorrichtung nach einem der Ansprüche 12 bis 14, dadurch gekennzeichnet, dass die Trägheitsmasse (52) und der Rasthebel (54) in einer Kapsel (36) mit einer Ausnehmung (50) der Aufrollerwelle (2) zwischen dem Klinkenzahnrad (27) und der Gurtbandspule (3) angeordnet sind.

16. Aufwickelvorrichtung nach Anspruch 15, dadurch gekennzeichnet, dass in die Ausnehmung (50) der Aufrollerwelle (2) ein Zapfen (51) ragt, der an einem Verschluss (12) für den Treibsatz (10) des Rotationskolbenmotors angebracht ist, wobei der Zapfen (51) mit einer Buchse (28) zur Lagerung der Aufrollerwelle (3) und mit dem Zapfen (51) zur Lagerung der Trägheitsmasse (52) versehen ist.

17. Aufwickelvorrichtung nach einem der vorstehenden Ansprüche, dadurch gekennzeichnet, dass das Gehäuse des Gurtaufrollautomaten zwei von einer rückseitigen Platte (5) nach vorne ragende plattenförmige Schenkel (6, 7) aufweist, wobei an dem einen Schenkel (7) das Rückstrammergehäuse (8) befestigt ist, das den Ringraum (15) des Rotationskolbenmotors, den Anschlagnocken (19) für den Drehflügel (18), einen Hohlzapfen (20) zur Aufnahme des Treibsatzes (10), die Nut für eine die Steuerscheibe (17) belastende Feder, die Lager (64, 64') für Absperrklinken (46, 46') der Sperreinrichtung und den Raum zur Aufnahme des Gehäuses (67) mit der Kugel (31), dem Hebel (33) und der schiefen Ebene (32) zur fahrzeugsensitiven Blockierung umfasst.

18. Aufwickelvorrichtung nach Anspruch 17, dadurch gekennzeichnet, dass das Rückstrammergehäuse (8) über Verbindungskrallen (9) mit dem zugehörigen Schenkel (7) des Gurtaufrollautomatengehäuses verbunden ist.

**Claims**

1. Reeling device for safety belts in vehicles, with an automatic belt roller and a reverse tightener operated by a pyrotechnic drive means and having a ring (17) which is rotationally coupled with a rotor (18) of a rotary piston motor and which can be coupled to the roller drive shaft (3) of the automatic belt roller and which is coaxial with the rotation axis of the rotor (18) of the roller drive shaft (3), the roller drive shaft (3) being rotationally coupled with a ratchet wheel (27) in which a sensor catch (34) engages for vehicle responsive locking of the automatic belt roller, characterized by at least one locking element (24, 24') which is positioned on the ring (17) rotationally connected with the rotor (18) and which is connected with a control disc (37) via a guide (38, 38', 39, 39') and which via the control disc (37) can be caused to engage with and disengage from the ratchet wheel (27) rotationally coupled with the roller shaft, as well as by a locking device (44, 46, 46') which prevents the ring (17) from the rotation in the belt withdrawal direction.

2. Reeling device in accordance with Claim 1, characterized by the fact that two diametrically opposed locking elements (24, 24') are provided on the ring (17).

3. Reeling device in accordance with Claim 1 or 2, characterized by the fact that the locking element or locking elements are constructed as holding panels (24, 24') which can be subjected to traction.

4. Reeling device in accordance with Claim 3, characterized by the fact that the guide connecting the pawl or pawls with the control disc 37 is formed by a guide pin (38, 38') which is situated at that end of the pawl or pawls (24, 24') which is furthest away from a pivot (23, 23') of the pawl and which extends into a guide slot (39, 39') in the disc (37), the said slot extending from the inside towards the outside in an oblique radial direction from the advancing end of the slot as viewed in the belt withdrawal direction to the lagging end.

3. Reeling device in accordance with any one of the preceding claims, characterized by the fact that the disc (37) has a lug (40) with a preset fracture point (41) and a stop face (43) for the said lug (40) integral with the housing.

6. Reeling device in accordance with any one of the preceding claims, characterized by the fact that the locking device which prevents the ring (17) from rotating in the belt witdrawal direction is formed by a tooth arranged (44) rotationally coupled with the ring (17) with at least one locking pawl (46, 46') springloaded towards the ring (17).

7. Reeling device in accordance with Claim 3 or any one of the preceding claims insofar as they refer to Claim 3, characterized by the fact that the tooth system (25, 25') of the pawls (24, 24') is so constructed that, when the ring (17) is stationary and the roller drive shaft (3) rotates in the belt retraction direction, it disengages from the tooth system (26) of the pawl wheel (27).

8. Reeling device in accordance with Claim 3 and Claim 6, characterized by the fact that after the termination of the belt tightening operation the pawl or pawls (24, 24'), bear, through their nose zones (62, 62'), opposite the pivot (23, 23'), over the spring loaded lock pawl or lock pawls (46') through which they are maintained in engagement with the tooth system (56) of the pawl wheel (27).

9. Reeling device in accordance with any one of the preceding claims, characterized by the fact that the sensor catch which engages the pawl wheel for the purpose of vehicle-responsive locking, comprises a pin (34) moving in a guide (47) in the control disc (37) so as to be displaceable in the direction of the pawl wheel (27), the control disc (37) being springloaded in the belt retraction direction.

10. Reeling device in accordance with Claim 9, characterized by the fact that the displacement of the pin (34) is effected by means of a lever (33) raised by a ball (31) rolling along a ramp plane (32).

11. Reeling device in accordance with any one of Claims 5, 8 and 9, characterized by the fact that the spring (48) supports itself between the housing (8) of the tightening device and the lug (40) in order to spring-load the control disc (37) in the belt retraction direction.

12. Reeling device in accordance with any one of the preceding claims, characterized by the fact that for the belt-responsive locking action the control disc (37) has an internal tooth system (60), a pin (51) integral with the housing and coaxial with the belt roller drive shaft (2) carrying a pivotable mass (52) connected via a guide with a stop lever (54) which is pivotable about a shaft (56) rotationally connected with the belt roller drive shaft (2) and which upon a rotation of the belt roller drive shaft (2) in the belt extraction direction is guided radially outwards through a stop face (59) integral with the belt roller drive shaft, so as to engage the integral tooth system (60) of the control disc (37).

13. Reeling device in accordance with Claim 12, characterized by the fact that the guide connecting the mass (52) to the stop lever (53) is formed by a guide pin (57) on the mass (52) and by a guide slot (59) in the stop lever (54) with the guide pin (57) extending into the said slot, the said guide slot (58) extendings from the shaft (56) of the stop lever to the stop face (59).

14. Reeling device in accordance with Claim 12 or 13, characterized by the fact that the mass (52) is springloaded in the belt withdrawal direction.

15. Reeling device in accordance with any one of Claims 12 to 14, characterized by the fact that the mass (52) and the stop lever (54) are positioned in a casing (36) with a recess (50) of the roller axle (2) between the pawl wheel (27) and the belt spool (3).

16. Reeling device in accordance with Claim 15, characterized by the fact that the pin (51) extends into the recess (50) of the belt roller axle (2), the pin being mounted on a closure (12) for the charge (10) driving the rotary piston motor, the pin (51) being provided with a bush (28) for the support of the belt roller drive shaft (3) and with the pin (51) for the support of the mass (52).

17. Reeling device in accordance with any one of the preceding claims, wherein the housing of the automatic belt winding device has two side plates (6, 7) extendings forwards from a rear plate (5), one side plate (7) carrying tightener housing (8) which comprises the annular chamber (15) of the rotary piston motor, the lug cam (19) for the rotor (18), a hollow pin (29) to accomodate the charge (10), the groove for a spring which biases the plate cam (17), the supports (64, 64') for lock panels (46, 46') of the locking device and the chamber to accomodate the housing (67) with the ball (31), the lever (33) and the ramp plane (32) for the vehicle-responsive locking action.

18. Reeling device in accordance with Claim 17, characterized by the fact that the housing (8) of the tightener is connected to the respective side (7) of the housing of the automatic belt winding apparatus through connecting claws (9).

**Revendications**

1. Dispositif d'enroulement pour ceintures de sécurité de véhicules automobiles, comprenant un enrouleur automatique et un raidisseur qui comporte un anneau (17) raccordé fixé en rotation, par un moteur à piston rotatif pouvant être entraîné par une charge propulsive pyrotechnique, à une palette (18) du moteur à piston rotatif, pouvant être accouplé à l'arbre (3) de l'enrouleur automatique et coaxial à l'axe de rotation de la palette (18) de l'arbre (3) de l'enrouleur, l'arbre (3) de l'enrouleur étant relié fixe en rotation à une roue à rochet (27) dans laquelle engrène un capteur (34) pour le blocage, sensible au véhicule, de l'enrouleur automatique, caractérisé par au moins un élément de blocage (24, 24') qui, disposé sur l'anneau (17) raccordé fixé en rotation à la palette (18), est relié par un guidage (38, 38', 39, 39') à un disque de commande (37) et peut être engrené par le disque de commande (37), dans la roue à rochet (27) raccordée fixée en rotation à l'arbre (3) de l'enrouleur et désengrené de celle-ci, ainsi que par un dispositif d'arrêt (44, 46, 46') qui empêche une rotation de l'anneau (17) dans le sens de l'extension de la sangle.

2. Dispositif d'enroulement selon la revendication 1, caractérisé par le fait que deux éléments de blocage (24, 24') diamétralement opposés sont prévus sur l'anneau (17).

3. Dispositif d'enroulement selon la revendication 1 ou 2, caractérisé par le fait que l'élément de blocage ou les éléments de blocage est ou sont réalisé(s) sous forme de verrou(s) denté(s) (24, 24') pouvant être sollicité(s) en traction.

4. Dispositif d'enroulement selon la revendication 3, caractérisé par le fait que le guidage, par le quel le ou les verrous(s) (24, 24') est ou sont raccordé(s) au disque de commande (37), est formé par un téton de guidage (38, 38') qui est placé à l'extrémité du ou des verrou(s) (24, 24') qui est située du côté opposé à un axe de pivotement (23, 23') du ou des verrou(s) et fait saillie dans une fente de guidage (39, 39') qui est pratiquée dans le disque de commande (37) et qui s'étend obliquement radialement de l'intérieur vers l'extérieur depuis son extrémité avant jusqu'à son extrémité arrière dans le sens de la rétraction de la bande.

5. Dispositif d'enroulement selon l'une des revendications précédentes, caractérisé par le fait que le disque de commande (37) comporte un ergot (40) muni d'une amorce de rupture (41) et qu'une surface de butée (43) solidaire du carter est prévue pour l'ergot (40).

6. Dispositif d'enroulement selon l'une des revendications précédentes, caractérisé par le fait que le dispositif d'arrêt qui empêche une rotation de l'anneau (17) dans le sens de l'extension de la sangle est formé par une denture (44) raccordée fixée en rotation à l'anneau (17) et au moins un cliquet d'arrêt (46, 46') solidaire du carter et soumis à l'action d'un ressort en direction de l'anneau (17).

7. Dispositif d'enroulement selon la revendication 3 ou l'une des revendications précédentes dans la mesure où elle se rapporte à la revendication 3, caractérisé par le fait que la denture (25, 25') du verrou ou des verrou(s) (24, 24') est réalisée de façon qu'en cas d'arrêt de l'anneau (17) et rotation de l'arbre (3) de l'enrouleur dans le sens de la rétraction de la sangle elle soit désengrenée de la denture (26) de la roue à rochet (27).

8. Dispositif d'enroulement selon la revendication 3 et la revendication 6, caractérisé par le fait qu'après la fin du raidissement de la sangle, le ou les verrous (24, 24') par leurs zones de tête (62, 62') situées du côté opposé à leurs axe de pivotement (23, 23') viennent s'appliquer sur le ou les cliquets d'arrêt (46, 46') commandés par ressorts et sont maintenus par celui-ci ou ceux-ci en prise avec la denture (56) de la roue à rochet (27).

9. Dispositif d'enroulement selon l'une des revendications précédentes, caractérisé par le fait que le capteur qui engrène dans la roue à rochet (27) pour le blocage sensible au véhicule est réalisé sous la forme d'un doigt (34) qui coulisse dans un guidage (47) du disque de commande (37) en direction de la roue à rochet (27), le disque de commande (37) étant soumis à l'action d'un ressort dans le sens de la rétraction de la sangle.

10. Dispositif d'enroulement selon le revendication 9, caractérisé par le fait que le déplacement du doigt (34) est opéré par un levier (33) qui est soulevé par une bille (31) montant sur un plan incliné (32).

11. Dispositif d'enroulement selon l'une des revendications 5 ainsi que 8 ou 9, caractérisé par le fait que le ressort (48) commandant le disque de commande (37) dans le sens de la rétraction de la sangle prend appui entre le carter (8) du raidisseur et l'ergot (40).

12. Dispositif d'enroulement selon l'une des revendication précédentes, caractérisé par le fait que pour le blocage sensible à la sangle, le disque de commande (37) comporte une denture intérieure (60) et sur un tourillon (51) solidaire du carter et coaxial à l'arbre (2) de l'enrouleur est prévue une masse d'inertie pivotable (52) qui, par un guidage, est raccordée à un levier d'encliquetage (54) qui peut pivoter autour d'un axe (56) fixé en rotation avec l'arbre (2) de l'enrouleur et qui, en cas d'une rotation de l'arbre (2) de l'enrouleur dans le sens de l'extension de la sangle, est dévié par une surface de butée (59) solidaire de l'arbre de l'enrouleur radialement vers l'extérieur et vient en prise avec la denture intérieure (60) du disque de commande (37).

13. Dispositif d'enroulement selon la revendication 12, caractérisé par le fait que le guidage par lequel la masse d'inertie (52) est raccordée au levier d'encliquetage (54) est formé par un téton de guidage (57) de la masse d'inertie (52) et par une fente de guidage (58) pratiquée dans le levier d'encliquetage (54) et dans laquelle fait saillie le téton de guidage (57), la fente de guidage (58) s'étendant sensiblement de l'axe (56) du levier d'encliquetage jusqu'à la surface de butée (59).

14. Dispositif d'enroulement selon la revendication 12 ou 13, caractérisé par le fait que la masse d'inertie (52) est soumise à l'action d'un ressort dans le sens de l'extension de la sangle.

15. Dispositif d'enroulement selon l'une des revendications 12 à 14, caractérisé par le fait que la masse d'inertie (52) et le levier d'encliquetage (54) sont placés dans une capsule (36) avec un évidement (50) de l'arbre (2) de l'enrouleur entre le roue à rochet (27) et la bobine à sangle (3).

16. Dispositif d'enroulement selon la revendication 15, caractérisé par le fait que dans l'évidement (50) de l'arbre (2) de l'enrouleur fait saillie un tourillon (51) qui est disposé sur un tampon (12) pour la charge propulsive (10) du moteur à piston rotatif, le tourillon (51) étant muni d'une douille (28) pour le montage de l'arbre (3) de l'enrouleur (3) et avec le tourillon (51) pour le montage de la masse d'inertie (52).

17. Dispositif d'enroulement selon l'une des revendications précédentes, caractérisé per le fait que le boîtier de l'enrouleur automatique comporte deux côtés (6, 7) en forme de plaques faisant saillie vers l'avant à partir d'une plaque arrière (5), sur l'un des côtés (7) étant fixé le carter (87 du raidisseur qui comprend la chambre annulaire (15) du moteur à piston rotatif, la came de butée (19) pour la palette (18), un tourillon creux (20) pour recevoir la charge propulsive (10), la rainure pour un ressort commandant le disque de commande (17), les paliers (64, 64') pour les cliquets (46, 46') du dispositif d'arrêt et l'espace pour recevoir le logement (67) avec la bille (31), le levier (33) et le plan incliné (32) pour le blocage sensible au véhicule.

18. Dispositif d'enroulement selon la revendication 17, caractérisé par le fait que le carter (8) du raidisseur est raccordé par des griffes (9) à la branche correspondante (7) du boîtier de l'enrouleur automatique.

Fig. 3

Fig. 4

Fig. 5

Fig. 6

Fig. 7

0 093 233

0 093 233

Fig. 8

Fig. 9